# FASCICULE DE BREVET EUROPEEN

(11) **EP 1 590 562 B1**
(45) Date de publication et mention de la délivrance du brevet: **09.07.2008**
(21) Numéro de dépôt: 03815397.9
(22) Date de dépôt: 12.12.2003
(51) Int. Cl.: F02D 41/24, F02D 41/14

(54) **PROCEDE DE COMMANDE D ELEMENTS D EXECUTION DE FONCTIONS ELEMENTAIRES DE MOTEUR A COMBUSTION INTERNE.**
VERFAHREN ZUR STEUERUNG VON ZUR AUSFÜHRUNG DER GRUNDFUNKTIONEN EINES VERBRENNUNGSMOTORS VERWENDETEN ELEMENTEN
METHOD OF CONTROLLING ELEMENTS USED TO EXECUTE ELEMENTARY FUNCTIONS OF AN INTERNAL COMBUSTION ENGINE

(30) Priorité: 18.12.2002 FR 0216128
(43) Date de publication de la demande: 02.11.2005
(73) Titulaire: RENAULT S.A.S., 92100 Boulogne Billancourt (FR)
(72) Inventeur: DANEAU, Marc, F-92100 Boulogne Billancourt (FR); DIONNET, Bernard, F-91150 Morigny-Champigny (FR); GRUSON, Xavier, f-75015 Paris (FR); PELLETIER, Philippe, f-91510 Lardy (FR)
(86) Numéro de dépôt international: PCT/FR2003/003694
(87) Numéro de publication internationale: WO 2004/065774

(56) Documents cités:
- EP-A- 1 079 090
- DE-A- 10 020 448
- DE-A- 19 545 706
- DE-A- 19 911 664
- FR-A- 2 772 427
- US-A- 4 546 747

## Description

La présente invention concerne un procédé de commande d'éléments d'exécution de fonctions élémentaires de moteur à combustion interne.

Le contrôle et la commande du fonctionnement du moteur sont effectués à l'aide d'éléments d'exécution de fonctions élémentaires, du type actionneurs et capteurs, selon des réglages définis lors d'une mise au point du moteur.

Néanmoins, des éléments d'exécution de fonctions élémentaires de même conception peuvent présenter des différences ou dispersions dues, soit à des dispersions dans la fabrication des éléments d'exécution ou à un vieillissement différent des éléments d'exécution. Dans le cas d'un actionneur, la position de deux actionneurs identiques présentant une dispersion peut être différente pour un même signal de commande. Dans le cas de deux capteurs identiques présentant une dispersion, un signal de mesure fourni peut être différent pour une même grandeur physique réelle vue par le capteur. De telles dispersions dans les éléments d'exécution de fonctions élémentaires nuisent à un contrôle satisfaisant du moteur à combustion interne, et des moyens de purification des gaz d'échappement pour empêcher ou tout du moins diminuer le plus possible les émissions de gaz polluants. De telles dispersions peuvent entraîner des dispersions d'un véhicule à un autre d'émissions de polluants entraînant une augmentation des coûts de mise au point et de fabrication pour s'assurer que chaque véhicule respecte des taux d'émission de polluant définis.

On connaît par le brevet US-A-4 546 747 l'utilisation d'une sonde de mesure de la teneur en oxygène dans les gaz d'échappement d'un moteur ainsi que des moyens pour compenser une éventuelle dérive de cette sonde au fur et à mesure de son utilisation.

La présente invention a pour objet un procédé de commande d'éléments d'exécution de fonctions élémentaires de moteurs à combustion interne permettant de compenser des dispersions pouvant affecter les éléments d'exécution, du fait de leur fabrication ou de leur vieillissement.

La présente invention concerne également un procédé de commande d'éléments d'exécution de fonctions élémentaires nécessitant des modifications mineures d'un ensemble de contrôle et de commande d'un moteur à combustion interne, pouvant être mis en oeuvre facilement, et sans surcoût prohibitif.

Dans un tel procédé de commande d'éléments d'exécution de fonctions élémentaires de moteurs à combustion interne, on commande des éléments à partir de signaux de mesure fournis par des capteurs, on détermine des signaux théoriques devant être fournis par des capteurs de référence au point de fonctionnement actuel du moteur, on détermine des écarts entre les signaux théoriques et les signaux mesurés par les capteurs de référence comprenant un capteur d'oxydes d'azote et une sonde à oxygène, et on élabore à partir d'une cartographie des instructions de correction de signaux destinés à ou fournis par des éléments en fonction des écarts déterminés.

Des éléments d'exécution de fonction élémentaires sont de façon générale et non limitative des actionneurs/actuateurs et des capteurs utilisés pour le contrôle et la commande du fonctionnement du moteur à combustion interne. Dans le cas d'actionneurs, les instructions de correction de signaux de commande des éléments peuvent être directement des signaux de commande corrigés, ou des signaux de correction destinés à être ajoutés, à la manière d'un « offset » ou décalage, à des signaux de commande élaborés par ailleurs par une unité de commande prévue pour le fonctionnement normal du moteur à combustion. Dans le cas de capteurs, les instructions de correction peuvent être l'application d'une valeur de décalage ou « offset » ou d'un gain aux signaux de mesure fournis par les capteurs.

La détermination d'écarts entre des signaux théoriques et des signaux effectivement mesurés par des capteurs de référence utilisés pour la commande du moteur à combustion interne, permet de tenir compte de dispersions pouvant apparaître sur les éléments d'exécution de fonctions élémentaires associés au moteur à combustion interne, actionneurs ou capteurs (y compris les capteurs de référence), par rapport à des signaux de mesure théoriques qui auraient du être fournis par les capteurs de référence dans les mêmes conditions de fonctionnement. Les signaux théoriques peuvent être déterminés lors de la mise au point du moteur à combustion interne, par exemple à partir d'un moteur de référence. Le procédé de commande pourra être utilisé sur tous les moteurs à combustion interne de conception identique.

Les capteurs de référence peuvent être de façon avantageuse des capteurs de mesure de la composition des gaz d'échappement, tels qu'une ou plusieurs sondes à oxygène et/ou une ou plusieurs sondes à oxyde d'azote disposées sur la ligne d'échappement du moteur à combustion interne. Les signaux de mesures fournis par de telles sondes sont directement en relation avec les émissions de polluant.

Un point de fonctionnement du moteur peut être déterminé en fonction d'un régime du moteur et d'une charge de moteur, et également en fonction d'une température de liquide de refroidissement du moteur. On pourra utiliser toute mesure ou variable ayant une influence significative sur les mesures de références.

Dans un mode de mise en oeuvre, on détermine les signaux de mesure théoriques devant être fournis par un capteur de référence à partir d'une table établie préalablement pour des points de fonctionnement déterminés. Les points de fonctionnement choisis pour l'établissement de la table sont de préférence des points de fonctionnement pour lesquels la variation d'émissions de polluants est la plus importante en fonction de dispersions pouvant apparaître sur les éléments d'exécution de fonctions élémentaires.

Les instructions de correction de signaux de commande d'un élément peuvent également être déterminées à partir d'une table de correction établie préalablement, pour des points de fonctionnement déterminés.

Afin d'éviter que l'élaboration et l'application d'instructions de correction de signaux de commande n'entraînent une instabilité d'une régulation de la commande d'un moteur à combustion interne, on peut prévoir de filtrer un signal d'écart entre des signaux des capteurs théoriques et des signaux de capteurs mesurés, avant de déterminer des instructions de correction, pour augmenter un temps de réaction ou d'application d'instructions de correction, de façon à adapter le temps de réaction de la correction à un temps caractéristique de réponse du moteur à combustion interne et de ses éléments d'exécution.

Des éléments d'exécution de fonctions élémentaires peuvent avantageusement être choisis parmi une vanne de recirculation des gaz d'échappement, un injecteur, une électrovanne de commande de géométrie de turbine d'un dispositif de turbo, un capteur de pression dans une rampe commune d'alimentation en carburant, un capteur de débit dans une ligne d'alimentation en air ou un papillon d'admission d'air, ou un capteur de pression d'admission.

L'invention concerne également un ensemble d'entraînement comprenant un moteur à combustion interne et des éléments d'exécution de fonctions élémentaires tels que des actionneurs et/ou des capteurs, et une unité de commande, caractérisé par le fait que l'unité de commande comprend des moyens pour comparer des signaux de mesures issus des capteurs de référence à des signaux de mesure théoriques au point de fonctionnement du moteur, et des moyens pour déterminer des instructions de correction de signaux de commande des éléments d'exécution en fonction d'un écart entre les signaux de mesures issus des capteurs de référence comprenant un capteur d'oxydes d'azote et une sonde à oxygène et les signaux de mesure théoriques.

L'invention concerne également un véhicule automobile comprenant un tel ensemble d'entraînement.

La présente invention et ses avantages seront mieux compris à l'étude de la description détaillée d'un mode de réalisation pris à titre d'exemple nullement limitatif et illustré par les dessins annexés, sur lesquels :
- la figure 1 est une vue schématique d'ensemble d'un moteur à combustion interne, muni d'éléments d'exécution de fonctions élémentaires commandés par une unité de commande ; et
- la figure 2 est un schéma-bloc illustrant des modules d'une unité de commande notamment pour l'élaboration d'instructions de correction.

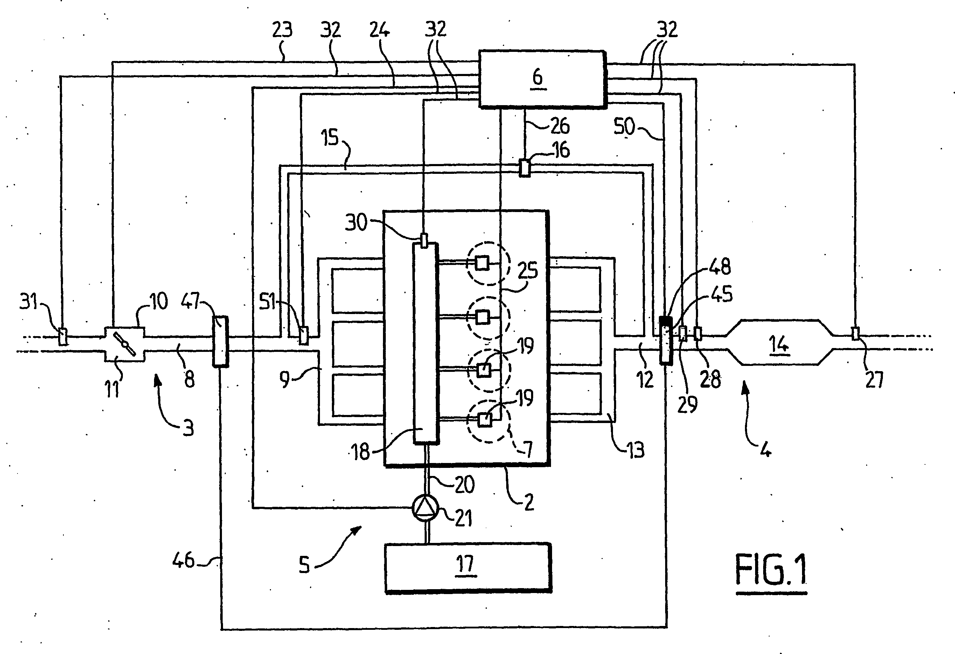

Sur la figure 1, un ensemble d'entraînement référencé 1 dans son ensemble comprend un moteur à combustion interne 2, une ligne d'admission d'air 3, une ligne d'échappement 4, un dispositif d'alimentation en carburant 5, et une unité de commande 6.

Le moteur à combustion interne 2 comprend des chambres de combustion ou cylindres 7, ici au nombre de quatre, et représentés par ces cercles en pointillés.

La ligne d'alimentation 3 comprend une conduite intermédiaire d'alimentation 8 débouchant d'un côté dans un collecteur d'admission 9 à une entrée et quatre sorties pour distribuer un flux d'air admis dans les chambres de combustion 7, et muni du côté opposé d'un élément de commande de débit d'air admis 10 sous la forme d'un papillon d'admission 11 disposé entre la conduite intermédiaire d'alimentation 8 et une prise d'air, non représentée sur le dessin. La position du papillon 11 peut être commandée à l'aide d'un actionneur, non représenté.

La ligne d'échappement 4 comprend une conduite intermédiaire d'échappement 12, dont une entrée est reliée à un collecteur d'échappement 13 à quatre entrées et une sortie, pour récupérer et canaliser un flux de gaz d'échappement issu des cylindres 7 du moteur 2, une sortie de la conduite intermédiaire d'échappement 12 étant reliée à un moyen de purification des gaz d'échappement 14 disposé en amont d'une sortie terminale de la ligne d'échappement 4, non représentée sur la figure. Le moyen de purification des gaz d'échappement peut être choisi, à titre d'exemple non limitatif, parmi un convertisseur catalytique, un filtre à particules, un piège à oxydes d'azotes. Plusieurs moyens de purifications peuvent être envisagés simultanément.

Une conduite de recirculation des gaz d'échappement 15 est disposée entre la ligne d'admission 3 et la ligne d'échappement 4. La conduite de recirculation 15 débouche d'un côté dans la conduite intermédiaire d'échappement 12 et du côté opposé dans la conduite intermédiaire d'admission 8. Un débit de gaz d'échappement dans la conduite de recirculation 15, de la conduite intermédiaire d'échappement 12 vers la conduite intermédiaire d'admission 8, est commandé par l'intermédiaire d'une vanne de recirculation des gaz d'échappement 16 disposée sur une portion intermédiaire de la conduite de recirculation 15.

Le dispositif d'alimentation en carburant 5 comprend un réservoir de carburant 17, une rampe commune 18 et des injecteurs 19, ici au nombre de quatre, prévus pour l'injection de carburant directement dans les cylindres 7 du moteur 2. La rampe commune 18 est reliée au réservoir 17 par l'intermédiaire d'une conduite d'alimentation 20, et d'un système d'alimentation 21 reliant la conduite d'alimentation 20 au réservoir 17. Le système d'alimentation 20 peut comprendre à titre d'exemple nullement limitatif une pompe d'alimentation haute pression, elle-même alimentée à partir du réservoir par une pompe basse pression ou pompe de « gavage ». Les injecteurs 19 sont reliés à la rampe commune 18 par l'intermédiaire de conduites d'injection 22. Le système d'alimentation 21 est commandé pour remplir la rampe commune 18 en carburant et maintenir une pression de consigne dans la rampe commune 18 servant de réservoir de pression pour l'alimentation de chacun des injecteurs 19.

L'ensemble d'entraînement 1 comprend un dispositif de turbo comprenant une turbine 45 disposée sur la conduite intermédiaire d'échappement 12 en aval du collecteur d'échappement 13, la turbine 45 entraînant par l'intermédiaire d'un axe de turbo 46, représenté de façon schématique par un trait, un compresseur 47 disposé sur la conduite intermédiaire d'admission 8; en amont du collecteur d'admission 9. Le dispositif de turbo comprend de façon connue en soi une électrovanne de commande de géométrie de turbine 48, disposée sur la turbine 45.

L'unité de commande 6 est prévue pour élaborer des signaux de commande du papillon 11, de la pompe d'alimentation 21, des injecteurs 19, de la vanne de recirculation 16, et de l'électrovanne de commande de géométrie de turbine 48.

L'unité de commande 6 est reliée par des liaisons de commande, respectivement 23, 24, 25, 26 et 50, à l'actionneur commandant la position du papillon 11, à la pompe d'alimentation 21, aux injecteurs 19, la vanne de recirculation 16 et à l'électrovanne de commande de géométrie de turbine 48.

L'unité de commande 6 utilise, pour l'élaboration des signaux de commande, des signaux de mesure provenant d'un ensemble de capteurs dont une première sonde à oxygène 27 située sur la ligne d'échappement 4 en aval du moyen de purification 14, une seconde sonde à oxygène 28 disposée sur la ligne d'échappement 4 en amont du moyen de purification 14, une sonde à oxyde d'azote 29 disposée sur la conduite intermédiaire d'échappement 12 pour connaître une teneur en oxyde d'azote et en oxygène des gaz d'échappement, un capteur de pression 30 régnant dans la rampe commune 18, et un capteur de débit 31 pour déterminer le débit d'air en amont du papillon 11 et un capteur de pression 51 dans le collecteur d'admission 9. L'unité de commande 6 est reliée à ces capteurs 27 à 31 par l'intermédiaire de liaisons de mesure 32.

Bien entendu, on prévoit l'utilisation de capteurs adaptés en fonction des organes de l'ensemble d'entraînement 1. Notamment, on pourra prévoir des capteurs associés au moyen de purification 14 différents selon le type de moyen de purification utilisé (catalyseur, filtre à particules, piège à oxydes d'azote). Les capteurs associés au moyen de purification seront du type capteur d'oxygène, capteur d'oxydes d'azote, capteur de température, capteur de pression...En outre, on pourra prévoir qu'un capteur puisse regrouper plusieurs fonctions. Notamment, un unique capteur pourra être utilisé à la fois pour mesurer une teneur de gaz d'échappement en oxygène et en oxydes d'azote.

En fonctionnement, l'unité de commande 6 reçoit les signaux de mesure des première et seconde sondes à oxygène 27, 28 et de la sonde à oxyde d'azote 29, du capteur de pression 30, du capteur de débit 31 et du capteur de pression 51 de collecteur d'admission 9. A partir de ces mesures, et de tout autre signal nécessaire ou utile pour la commande du moteur à combustion interne, tel que le signal de position d'une pédale d'accélérateur, la vitesse de rotation du moteur ou la charge appliquée au moteur, ou une température du liquide de refroidissement,..., l'unité de commande 6 élabore des signaux de commande du papillon 11, de la pompe 21, des injecteurs 19, de la vanne de recirculation 16, et de l'électrovanne de géométrie de turbine 48. L'unité de commande 6 détermine les signaux de commande en fonction d'algorithmes et de cartographies prédéterminées et mis au point pour l'ensemble d'entraînement 1.

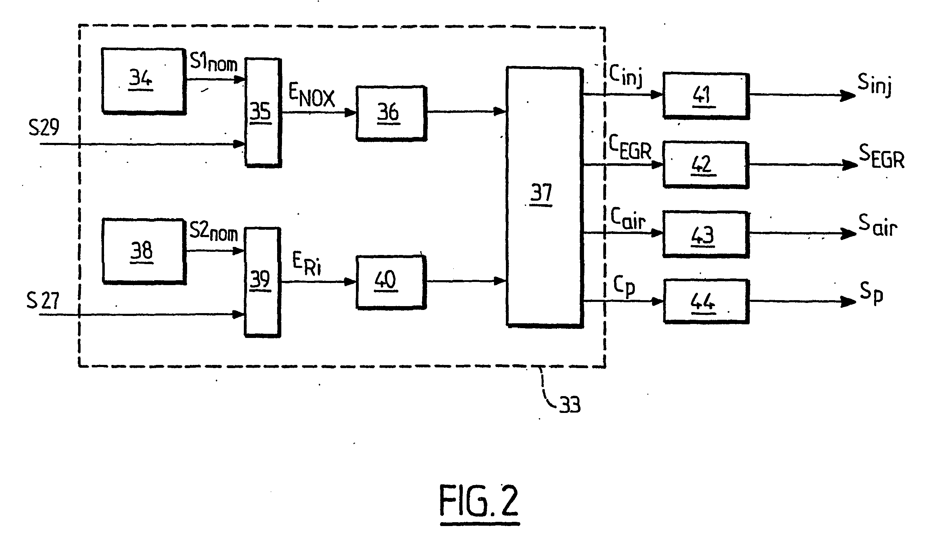

La figure 2 est décrite par la suite en conservant les références numériques utilisées pour la figure 1.

Un ensemble de corrections 33, prévu pour être inséré dans l'unité de commande 6, par exemple sous la forme d'étages logiciels, comprend une cartographie d'oxydes d'azote 34 sous la forme d'une table établie préalablement et fournissant, en fonction d'un point de fonctionnement actuel du moteur, un signal de mesure théorique devant être fourni par le capteur d'oxyde d'azote 29.

Un comparateur 35 reçoit en entrée le signal théorique de mesure d'oxyde d'azote S1ₙₒₘ et le signal de mesure S29 provenant de la sonde d'oxyde d'azote 29, et fournit en sortie l'écart de mesure d'oxydes d'azote E_{NOx} défini comme la différence entre le signal théorique d'oxyde d'azote S1ₙₒₘ et le signal de mesure d'oxyde d'azote S29. L'écart de mesure d'oxydes d'azote E_{NOx}, après avoir été filtré dans un filtre 36, est envoyé en entrée d'un module de correction 37.

Un module de cartographie de teneur en oxygène 38 fournit un signal de mesure théorique de la teneur en oxygène des gaz d'échappement devant être fourni par la sonde à oxygène 27 en fonction d'un point de fonctionnement actuel du moteur à combustion interne.

Le signal théorique de mesure de la teneur en oxygène S2ₙₒₘ est transmis vers un comparateur 39, recevant également en entrée le signal de mesure provenant de la première sonde à oxygène S27, et fournissant en sortie un écart de teneur en oxygène E_{Ri} défini comme la différence entre le signal théorique de mesure de la teneur en oxygène S2ₙₒₘ et le signal de mesure provenant de la première sonde à oxygène S27. Le signal d'écart de la teneur en oxygène E_{Ri}, après passage dans un filtre 40, est transmis comme seconde entrée vers l'étage de correction 37.

L'étage de correction 37 comprend des cartographies à trois entrées et une sortie, chaque cartographie recevant en entrée l'écart d'oxyde d'azote E_{Nox}, l'écart de teneur en oxygène E_{Ri} et le point de fonctionnement actuel du moteur, et fournissant en sortie une instruction de correction destinée à un élément d'exécution particulier.

L'étage de correction 37 comprend ici quatre sorties : une première sortie d'instructions de correction Cᵢₙⱼ transmises vers un module de commande de débit d'injection 41 prévu pour l'élaboration d'un signal de commande Sᵢₙⱼ injecteurs, une seconde sortie d'instructions de correction de recirculation C_{egr} transmises vers un module de commande 42 prévu pour l'élaboration d'un signal de commande S_{egr} de la vanne de recirculation des gaz d'échappement 16, une troisième sortie d'instructions de correction Cᵣ transmises vers un module de commande de débit d'air 43 prévu pour l'élaboration d'un signal de commande Sᵣ de modification d'une fonction de transfert appliquée au signal de sortie du capteur de débit d'air admis 31, et une quatrième sortie d'instructions de correction Cₚ transmises vers un module de commande 44 pour l'élaboration d'un signal de commande Sp de modification de la fonction de transfert appliquée à un signal de sortie du capteur de pression 30 de la rampe commune 18.

Les modules de commande 41 à 44 sont prévus lors de la mise au point de l'ensemble d'entraînement pour l'élaboration de signaux de commande nominaux dans le cas où il n'existe pas de dispersion, et pour pouvoir appliquer les instructions de correction. Les instructions de correction peuvent avantageusement se présenter sous la forme de valeurs de gains pu de valeurs prévues pour être ajoutées à un signal de commande nominal d'un élément déterminé par le module de commande.

Les cartographies ou tables prédéterminées utilisées pour l'élaboration des instructions de correction, peuvent être établies lors de la mise au point de l'ensemble d'entraînement 1, à partir d'un moteur servant de référence pour les moteurs de conception identique. Pour ce faire, une méthode possible pour déterminer des cartographies comprend les étape décrites par la suite.

Dans un premier temps, on sélectionne un moteur de référence utilisé pour la mise au point. On établit à partir de ce moteur de référence des cartographies de référence, i.e. des tables indiquant pour des points de fonctionnement dit « d'apprentissage » les signaux de mesure dit « théoriques » fournis par des capteurs de référence, soit dans le mode de réalisation décrit auparavant une cartographie de référence de teneur en oxygène des gaz d'échappement et une cartographie de référence de teneur des gaz d'échappement en oxydes d'azote.

Ensuite, on introduit sur ce moteur de référence, de façon artificielle, des dispersions ou erreurs sur les éléments d'exécution (actionneurs/capteurs). On introduit de préférence des dispersions correspondant aux dispersions caractéristiques maximales que l'on aura pu constater pour chaque élément d'exécution. Différentes valeurs de dispersions peuvent être introduites pour chaque élément d'exécution, et des dispersions peuvent être introduites sur simultanément plusieurs éléments d'exécution, selon différentes combinaisons. On pourra parler de « jeu de dispersions ». Ensuite, on relève à chaque point de fonctionnement d'apprentissage, et pour chaque jeu de dispersions, les signaux de mesure fournis par des capteurs de référence dans une cartographie appelée par la suite cartographie « d'influence ». On connaît ainsi pour chaque jeu de dispersions à chaque point de fonctionnement d'apprentissage les mesures fournies pas les capteurs de référence.

On notera qu'il peut exister en grand nombre de jeux de dispersions et donc un grand nombre de mesures à effectuer. Pour diminuer le nombre de mesures à effectuer, on peut sélectionner certains points de fonctionnement d'apprentissage et certains jeux de dispersion. On choisira de préférences des configurations pour lesquelles l'influence sur les émissions de polluants sont les plus importantes, afin, par la suite, d'être à même de corriger de tels cas. Pour ce faire on pourra prévoir, de façon connue, la mise en place de plans d'expérience.

Dans une étape suivante, pour chaque point de la cartographie d'influence, chacun correspondant à un point de fonctionnement d'apprentissage du moteur et un jeu de dispersions, on détermine les écarts aux mesures de référence, i.e. la différence entre les signaux de mesure théoriques audit point de fonctionnement (cf. cartographie de référence), et les signaux de mesure obtenus enregistrés dans la cartographie d'influence.

Dans une étape suivante, on élabore, une cartographie de correction pour chaque élément d'exécution, ladite cartographie de correction déterminant les instructions de correction pour ledit élément d'exécution, et ce pour des couples point de fonctionnement d'apprentissage/jeu d'écarts aux mesures théoriques. Pour ce faire, pour chaque couple point de fonctionnement d'apprentissage/jeu d'écarts aux mesures de référence, on détermine dans la cartographie d'influence quel est le jeu de dispersion qui correspond, pour en déduire les instructions de corrections à apporter, qui peuvent simplement correspondre au jeu de dispersion.

Néanmoins, il peut exister pour un couple point de fonctionnement d'apprentissage/jeu d'écarts aux mesures théoriques plusieurs jeux de dispersions correspondants. Dès lors, il existe plusieurs solutions de combinaisons de corrections appliquées à un ou plusieurs éléments d'exécution pouvant être envisagées. Il est avantageux de choisir explicitement, pour chaque couple point de fonctionnement du moteur/jeu d'écarts aux mesures théoriques, quelle est la correction à apporter. Pour ce faire, on pourra utiliser d'autres critères déterminants. Par exemple, on pourrait choisir comme critère la combinaison de correction aboutissant à la consommation de carburant la moins importante. On pourrait prévoir d'autres critères. On pourrait également prévoir un algorithme apte à choisir un jeu de corrections parmi plusieurs jeux envisageables, en fonction de critères déterminés, que ce soit pour la mise au point, ou en temps réel, à l'aide d'un module embarqué.

Ensuite, lorsque les cartographies de correction ont été établies, elles sont enregistrées dans le module de correction 37 (fig. 2). Les cartographies de référence sont enregistrées dans les modules de cartographies de référence 34, 38 (fig. 2.).

En fonctionnement, à un point de fonctionnement du moteur à combustion interne, on détermine les écarts aux mesures théoriques pour les capteurs de référence. On obtient ainsi le jeu d'écarts aux mesures théoriques, et on retrouve dans les cartographie de correction les instructions de correction à appliquer à chaque élément d'exécution de fonction élémentaires concerné.

On a décrit un mode de réalisation dans lequel les signaux de mesure de référence sont une teneur des gaz d'échappement en oxydes d'azote et une teneur en oxygène des gaz d'échappement. Bien entendu, on pourrait prévoir d'utiliser d'autres signaux de mesure de référence, seuls ou en combinaison. L'augmentation d'un nombre de signaux de mesure de référence peut permettre de mieux différencier les différents cas de figure de dispersion en fonction d'un point de fonctionnement et d'un jeu d'écart.

Par ailleurs, l'invention n'est pas limitée aux cas où les instructions de correction concernent des actionneurs. Les instructions de corrections peuvent être appliquées à des capteurs pour compenser ou corriger un signal de mesure qui apparaît erroné. Les instructions de commande peuvent notamment s'appliquer aux capteurs de référence.

L'invention n'est pas non plus limitée au mode de réalisation décrit auparavant. La commande et le contrôle d'un moteur à combustion interne impliquent de nombreux éléments d'exécution autres que ceux cités à titre d'exemple nullement limitatif et pouvant être utilisés dans un procédé selon l'invention.

Grâce à l'invention, on obtient un procédé de commande d'éléments d'exécution de fonctions élémentaires d'un moteur à combustion interne permettant de compenser et corriger des dispersions d'origine ou dues au vieillissement, et pouvant perturber un fonctionnement du moteur ou d'organes associé, et notamment les émissions de polluant.

## Revendications

1. Procédé de compensation de dispersions d'éléments d'exécution de fonctions élémentaires tels que des actionneurs et/ou des capteurs utilisés pour la commande du fonctionnement d'un moteur à combustion interne (2), **caractérisé par le fait que** :
- on détermine des signaux théoriques représentant la teneur en oxygène et en oxydes d'azote des gaz d'échappement, à partir de cartographies en fonction de points de fonctionnement du moteur (2);
- on détermine les écarts entre les signaux théoriques précités et des signaux de mesure fournis par des capteurs de référence comprenant un capteur d'oxydes d'azote (29) et une sonde à oxygène (27) ;
- et on élabore, à partir d'une cartographie, des instructions de correction en fonction des écarts entre les signaux théoriques et les signaux de mesure fournis par les capteurs de référence et du point de fonctionnement du moteur pour chacun des éléments d'exécution particuliers, comprenant des instructions de correction pour les signaux de commande pour le débit d'injection, la recirculation des gaz d'échappement (EGR), le débit d'air, une fonction de transfert d'un capteur de pression de rampe commune.

2. Procédé selon la revendication 1, dans lequel on établit préalablement des cartographies des instructions de correction pour chacun des éléments d'exécution particuliers en utilisant un moteur de référence, au moyen des étapes suivantes :
- on établit, pour le moteur de référence, des cartographies de référence contenant les signaux théoriques pour des points de fonctionnement d'apprentissage du moteur;
- on introduit sur le moteur de référence des dispersions artificielles sur chacun des éléments d'exécution pour les points de fonctionnement d'apprentissage;
- on relève les signaux de mesure fournis par les capteurs de référence pour ces dispersions artificielles et on établit une cartographie d'influence des signaux relevés;
- pour chaque point de la cartographie d'influence, correspondant à un point de fonctionnement d'apprentissage du moteur, et un jeu de dispersion, on détermine des écarts entre les signaux théoriques de la cartographie de référence et les signaux de mesure relevés pour les capteurs de références ;
- et on élabore, pour chaque élément d'exécution une cartographie d'instructions de correction en fonction du point de fonctionnement d'apprentissage et des écarts précités.

3. Procédé selon les revendications 1 ou 2, **caractérisé par le fait qu'**au moins un capteur de référence est une sonde à oxygène (27, 28) disposée sur la ligne d'échappement (4) du moteur à combustion interne (2).

4. Procédé selon l'une quelconque des revendications 1 à 3, **caractérisé par le fait qu'**au moins un capteur de référence est une sonde à oxydes d'azote (29) disposée sur la ligne d'échappement (4) du moteur à combustion interne (2).

5. Procédé selon l'une quelconque des revendications précédentes, **caractérisé par le fait qu'**un point de fonctionnement du moteur (2) est déterminé en fonction d'un régime du moteur, d'une charge du moteur, et d'une température de liquide de refroidissement du moteur.

6. Procédé selon l'une quelconque des revendications précédentes, **caractérisé par le fait que** l'on filtre un signal d'écart entre des signaux des mesure théoriques et des signaux de mesure des capteurs de référence, avant de déterminer les instructions de correction, pour augmenter un temps de réaction ou d'application des instructions de correction.

7. Procédé selon l'une quelconque des revendications précédentes, **caractérisé par le fait qu**'au moins un élément d'exécution est choisi parmi : une vanne de recirculation des gaz d'échappement (16), un injecteur (19), une électrovanne de géométrie de turbine de dispositif de turbo (48), un capteur de pression (30) dans une rampe commune (18) d'alimentation en carburant, un capteur de débit (31) dans une ligne d'alimentation en air ou un papillon d'admission d'air (11), ou un capteur de pression (51) dans un collecteur d'admission (9).

8. Ensemble d'entraînement comprenant un moteur à combustion (2) interne et des éléments (11, 16, 19, 21, 27 - 31) d'exécution de fonctions élémentaires tels que des actionneurs et/ou des capteurs pour la commande du fonctionnement du moteur par une unité de commande (6) **caractérisé par le fait que** l'unité de commande (6) comprend des moyens (34, 35, 38, 39) pour comparer des signaux théoriques représentant la teneur en oxygène et en oxydes d'azote des gaz d'échappement au point de fonctionnement du moteur avec des signaux de mesure correspondant issus de capteurs de référence comprenant un capteur d'oxydes d'azote (29) et une sonde à oxygène (27) et des moyens (37) pour déterminer, des instructions de correction, en fonction des écarts entre les signaux théoriques et les signaux de mesure des capteurs de référence et du point de fonctionnement du moteur pour chacun des éléments d'exécution particuliers, comprenant des instructions de correction pour les signaux de commande pour le débit d'injection, la recirculation des gaz d'échappement (EGR), le débit d'air, une fonction de transfert d'un capteur de pression de rampe commune.

9. Véhicule automobile comprenant un ensemble d'entraînement selon la revendication 8.

## Claims

1. Method for compensating for spread on elements that execute elementary functions, such as actuators and/or sensors used to control the operation of an internal combustion engine (2), **characterized in that**:
- theoretical signals representing the oxygen content and nitrous oxides content of the exhaust gases are determined from maps as a function of operating points of the engine (2);
- the differences between the aforementioned theoretical signals and measurement signals supplied by reference sensors comprising a nitrous oxides sensor (29) and an oxygen probe (27) are determined;
- and, using a map, correction instructions are formulated as a function of the differences between the theoretical signals and the measurement signals supplied by the reference signals and as a function of the operating point of the engine for each of the particular execution elements comprising correction instructions for the signals controlling the injection flow rate, the exhaust gas recirculation (EGR), the air flow rate, and a common rail pressure sensor transfer function.

2. Method according to Claim 1, in which maps of the correction instructions for each of the particular execution elements are determined in advance using a reference engine, by means of the following steps:
- reference maps containing the theoretical signals for the engine learning operating points are established;
- artificial spread on each of the execution elements is introduced into the reference engine in respect of the learning operating points;
- the measurement signals supplied by the reference sensors for this artificial spread are recorded and a map representing the influence on the recorded signals is established;
- for each point on the influence map that corresponds to an engine learning operating point and to a range of spread, differences between the theoretical signals from the reference map and the measurement signals recorded for the reference sensors are determined;
- and for each execution element, a map of correction instructions as a function of the learning operating point and of the aforementioned differences is established.

3. Method according to Claims 1 or 2, **characterized in that** at least one reference sensor is an oxygen probe (27, 28) positioned in the exhaust line (4) of the internal combustion engine (2).

4. Method according to any one of Claims 1 to 3, **characterized in that** at least one reference sensor is a nitrous oxides probe (27) positioned in the exhaust line (4) of the internal combustion engine (2).

5. Method according to any one of the preceding claims, **characterized in that** an operating point of the engine (2) is determined as a function of an engine speed, of an engine load, and of an engine coolant temperature.

6. Method according to any one of the preceding claims, **characterized in that** a difference signal representing the difference between the theoretical measurement signals and the reference sensor measurement signals is filtered before the correction instructions are determined, in order to increase a response time or time to apply the corrective instructions.

7. Method according to any one of the preceding claims, **characterized in that** at least one execution element is chosen from: an exhaust gas recirculation valve (16), an injector (19), a turbo device turbine geometry electrically-operated valve (48), a pressure sensor (30) in a common rail (18) supplying fuel, a flow sensor (31) in an air supply line or an air inlet throttle valve (11), or a pressure sensor (51) in an inlet manifold (9).

8. Driver assembly comprising an internal combustion engine (2) and elements (11, 16, 19, 21, 27-31) for executing the elementary functions such as actuators and/or sensors for controlling the operation of the engine by means of a control unit (6), **characterized in that** the control unit (6) comprises means (34, 35, 38, 39) for comparing theoretical signals that represent the oxygen content and the nitrous oxides content of the exhaust gases at the engine operating point against corresponding measurement signals originating from reference sensors comprising a nitrous oxides sensor (29) and an oxygen probe (27) and means (37) for determining correction instructions as a function of the differences between the theoretical signals and the measurement signals from the reference sensors and as a function of the engine operating point in respect of each of the particular execution elements comprising correction instructions for correcting the control signals controlling the injection flow rate, the exhaust gas recirculation (EGR), the air flow rate, and a common rail pressure sensor transfer function.

9. Motor vehicle comprising a driver assembly according to Claim 8.

## Patentansprüche

1. Verfahren zur Kompensation von Streuungen bei Elementen zur Ausführung von Elementarfunktionen, wie Stellgliedern und/oder Sensoren, die zur Steuerung des Betriebs eines Verbrennungsmotors (2) verwendet werden, **dadurch gekennzeichnet, dass**:
- theoretische Signale, die den Sauerstoff- und Stickoxidgehalt der Abgase darstellen, ausgehend von Kartographien in Abhängigkeit von Betriebspunkten des Motors (2) bestimmt werden;
- die Abweichungen zwischen den erwähnten theoretischen Signalen und Messsignalen bestimmt werden, die von Referenzsensoren geliefert werden, die einen Stickoxidsensor (29) und eine Sauerstoffsonde (27) enthalten;
- und ausgehend von einer Kartographie Korrekturanweisungen in Abhängigkeit von den Abweichungen zwischen den theoretischen Signalen und den von den Referenzsensoren gelieferten Messsignalen und dem Betriebspunkt des Motors für jedes der einzelnen Ausführungselemente ausgearbeitet werden, die Korrekturanweisungen für die Steuersignale für den Einspritzdurchsatz, die Rückführung der Abgase (EGR), den Luftdurchsatz, eine Übertragungsfunktion eines Common-Rail-Drucksensors enthalten.

2. Verfahren nach Anspruch 1, bei dem vorab Kartographien der Korrekturanweisungen für jedes der einzelnen Ausführungselemente unter Verwendung eines Referenzmotors mittels der folgenden Schritte erstellt werden:
- Erstellen, für den Referenzmotor, von Referenzkartographien, die die theoretischen Signale für Lernbetriebspunkte des Motors enthalten;
- Einführen in den Referenzmotor der künstlichen Streuungen in jedes der Ausführungselemente für die Lernbetriebspunkte;
- Erfassen der von den Referenzsensoren für diese künstlichen Streuungen gelieferten Messsignale und Erstellen einer Einflusskartographie der erfassten Signale;
- für jeden Punkt der Einflusskartographie, entsprechend einem Lernbetriebspunkt des Motors, und ein Streuungsspiel, Bestimmen von Abweichungen zwischen den theoretischen Signalen der Referenzkartographie und den für die Referenzsensoren erfassten Messsignalen;
- und Ausarbeiten, für jedes Ausführungselement, einer Kartographie von Korrekturanweisungen in Abhängigkeit von Lernbetriebspunkt und den erwähnten Abweichungen.

3. Verfahren nach den Ansprüchen 1 oder 2, **dadurch gekennzeichnet, dass** mindestens ein Referenzsensor eine Sauerstoffsonde (27, 28) ist, die auf der Abgasleitung (4) des Verbrennungsmotors (2) angeordnet ist.

4. Verfahren nach einem der Ansprüche 1 bis 3, **dadurch gekennzeichnet, dass** mindestens ein Referenzsensor eine Stickoxidsonde (29) ist, die auf der Abgasleitung (4) des Verbrennungsmotors (2) angeordnet ist.

5. Verfahren nach einem der vorhergehenden Ansprüche, **dadurch gekennzeichnet, dass** ein Betriebspunkt des Motors (2) in Abhängigkeit von einer Drehzahl des Motors, einer Last des Motors, und einer Kühlflüssigkeitstemperatur des Motors bestimmt wird.

6. Verfahren nach einem der vorhergehenden Ansprüche, **dadurch gekennzeichnet, dass** ein Abweichungssignal zwischen theoretischen Messsignalen und Messsignalen der Referenzsensoren gefiltert wird, ehe die Korrekturanweisungen bestimmt werden, um eine Reaktions- oder Anwendungszeit der Korrekturanweisungen zu erhöhen.

7. Verfahren nach einem der vorhergehenden Ansprüche, **dadurch gekennzeichnet, dass** mindestens ein Ausführungselement ausgewählt wird aus: einem Abgasrückführungsventil (16), einem Injektor (19), einem Turbinengeometrie-Elektroventil einer Turbo-Vorrichtung (48), einem Drucksensor (30) in einer Common-Rail-Kraftstoffversorgung (18), einem Durchsatzsensor (31) in einer Luftzufuhrleitung oder einem Luftzufuhr-Drosselventil (11), oder einem Drucksensor (51) in einem Ansaugkrümmer (9).

8. Antriebseinheit, die einen Verbrennungsmotor (2) und Ausführungselemente (11, 16, 19, 21, 27 - 31) von Elementarfunktionen wie Stellglieder und/oder Sensoren für die Steuerung des Betriebs des Motors durch eine Steuereinheit (6) aufweist, **dadurch gekennzeichnet, dass** die Steuereinheit (6) Mittel (34, 35, 38, 39), um theoretische Signale, die den Sauerstoff- und Stockoxidgehalt der Abgase am Betriebspunkt des Motors darstellen, mit entsprechenden Messsignalen zu vergleichen, die von Referenzsensoren stammen, die einen Stickoxidsensor (29) und eine Sauerstoffsonde (27) umfassen, und Mittel (37) aufweist, um Korrekturanweisungen in Abhängigkeit von den Abweichungen zwischen den theoretischen Signalen und den Messsignalen der Referenzsensoren und dem Betriebspunkt des Motors für jedes der einzelnen Ausführungselemente zu bestimmen, die Korrekturanweisungen für die Steuersignale für den Einspritzdurchsatz, die Rückführung der Abgase (EGR), den Luftdurchsatz, eine Übertragungsfunktion eines Common-Rail-Drucksensors aufweisen.

9. Kraftfahrzeug, das eine Antriebseinheit nach Anspruch 8 aufweist.
